(19)

Europäisches
Patentamt
European
Patent Office
Office européen
des brevets

(11) **EP 2 581 762 A1**

(12) **EUROPEAN PATENT APPLICATION**

(43) Date of publication:
**17.04.2013 Bulletin 2013/16**

(51) Int Cl.:
***G01S 17/95*** (2006.01)       ***F03D 7/02*** (2006.01)

(21) Application number: **12188552.9**

(22) Date of filing: **15.10.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.10.2011   US 201113274095
14.10.2011   US 201113274108
30.11.2011   DK 201170660
16.12.2011   DK 201170714**

(71) Applicant: **Vestas Wind Systems A/S
8200 Aarhus N (DK)**

(72) Inventors:
  • **Bowyer, Robert
    London, SW16 6LE (GB)**

  • **Spruce, Christopher
    Leatherhead, KT23 4PD (GB)**
  • **Evans, Martin
    Oxford, OX12HB (GB)**
  • **Palmer, Christopher
    London, SW19 8NS (GB)**
  • **Hucker, Nicholas
    London, SW8 3ES (GB)**
  • **Couchman, Ian
    London, SW19 8NS (GB)**
  • **Hales, Kelvin
    Egham, TW20 9NB (GB)**

(74) Representative: **Reeve, Nicholas Edward
Reddie & Grose LLP
16 Theobalds Road
London WC1X 8PL (GB)**

(54) **Estimation of wind properties using a light detection and ranging device**

(57)     Embodiments of the invention provide methods, systems, and apparatus for determining a property of wind approaching a wind turbine. A light detection and ranging equipment may emit pulsed radiation into oncoming wind to detect properties of the wind at a plurality of predefined locations. A property of the wind approaching the wind turbine may be determined based on the property of wind measured at at least two predefined locations.

```
610 ── DETECT RADIATION REFLECTED
        FROM A PLURALITY OF
        PREDEFINED RANGE GATES

620 ── FOR EACH RANGE GATE, DETERMINE A
        PROPERTY OF WIND AT THE RANGE GATE
        BASED ON THE DETECTED RADIATION

630 ── DETERMINE THE PROPERTY OF THE WIND
        APPROACHING THE WIND TURBINE BASED
        ON THE DETERMINED PROPERTY OF WIND
        OF AT LEAST TWO RANGE GATES

640 ── TRANSFER THE DETERMINED PROPERTY OF
        WIND APPROACHING THE WIND TURBINE TO
        A CONTROLLER OF THE WIND TURBINE
```

FIG. 6

**Description**

**FIELD OF THE INVENTION**

Embodiments of the invention generally relate to the advance detection of wind speed and direction upstream of a Wind Turbine Generator (WTG), specifically methods and systems for processing wind signals for use in the WTG's controller.

**BACKGROUND**

In recent years, there has been an increased focus on reducing emissions of greenhouse gases generated by burning fossil fuels. One solution for reducing greenhouse gas emissions is developing renewable sources of energy. Particularly, energy derived from the wind has proven to be an environmentally safe and reliable source of energy, which can reduce dependence on fossil fuels.

Energy in wind can be captured by a wind turbine, which is a rotating machine that converts the kinetic energy of the wind into mechanical energy, and the mechanical energy subsequently into electrical power. Common horizontal-axis wind turbines include a tower, a nacelle located at the apex of the tower, and a rotor that is supported in the nacelle by means of a shaft. The shaft couples the rotor either directly or indirectly with a rotor assembly of a generator housed inside the nacelle. A plurality of wind turbines generators may be arranged together in a wind park or wind power plant to generate sufficient energy to support a grid.

In modern high performance wind turbines, it is becoming increasingly important to control the aerodynamic forces in conjunction with the aero-elastic response through active manipulation. Such control may be accomplished not only by aerodynamic means, but also by, for example, controlling the pitch of the blade or the rotational speed of the wind turbine rotor.

Most modern wind turbines are equipped with a wind sensor or sensors on the nacelle capable of detecting the wind speed and direction. Based on the detected wind speed and direction one or more control decisions such as pitching blades, yawing the turbine upwind, etc., may be taken to ensure generation of a desired amount of power, reduction of loads and stresses on wind turbine components, and the like.

**SUMMARY OF THE INVENTION**

The invention is defined in the independent claims to which reference should now be made. Advantageous features are set forth in the dependent claims.

Embodiments of the invention generally relate to the advance detection of wind speed and direction upstream of a Wind Turbine Generator (WTG), specifically methods and systems for processing wind signals for use in the WTG's controller. Examples of sensors that could be used for measuring the wind speed and direction in advance of the rotor are Radar, Light Detection And Ranging (LIDAR), SODAR and Laser Doppler Velocimeter.

**BRIEF DESCRIPTION OF THE DRAWINGS**

Embodiments of the present invention are explained, by way of example, and with reference to the accompanying drawings. It is to be noted that the appended drawings illustrate only examples of embodiments of this invention and are therefore not to be considered limiting of its scope, for the invention may admit to other equally effective embodiments.

Figure 1 illustrates an exemplary wind turbine according to an embodiment of the invention.

Figure 2 illustrates a more detailed view of components of an exemplary wind turbine according to an embodiment of the invention.

Figure 3 illustrates a light detection and ranging device according to an embodiment of the invention.

Figure 4 illustrates pulsed radiation according to an embodiment of the invention.

Figure 5 illustrates processing logic according to an embodiment of the invention.

Figure 6 is a flow diagram of an exemplary method for determining a property of wind approaching a wind turbine, according to an embodiment of the invention.

Figure 7 illustrates an exemplary light detection and ranging device according to an embodiment of the invention.

## DETAILED DESCRIPTION

In the following, reference is made to embodiments of the invention. However, it should be understood that the invention is not limited to the specific described embodiments. Instead, any combination of the following features and elements, whether related to different embodiments or not, is contemplated to implement and practice the invention. Various embodiments of the invention provides advantages over the prior art. However, although embodiments of the invention may achieve advantages over other possible solutions and/or over the prior art, whether or not a particular advantage is achieved by a given embodiment is not limiting of the invention. Thus, the following aspects, features, embodiments and advantages are merely illustrative and are not considered elements or limitations of the appended claims except where explicitly recited in a claim. Likewise, reference to "the invention" shall not be construed as a generalization of any inventive subject matter disclosed herein and shall not be considered to be an element or limitation of the appended claims except where explicitly recited in a claim.

The following is a detailed description of embodiments of the invention depicted in the accompanying drawings. The embodiments are examples and are in such detail as to clearly communicate the invention. However, the amount of detail offered is not intended to limit the anticipated variations of embodiments; but on the contrary, the intention is to cover all modifications, equivalents, and alternatives falling within the scope of the present invention as defined by the appended claims.

In general, it is desirable for a wind turbine to have advance knowledge about the properties of the wind which will shortly arrive at the turbine. Such knowledge gives the turbine controller sufficient time to adjust operating parameters, such as blade pitch angle or rotor speed, to match the oncoming conditions. This may be done for a variety of reasons. At lower wind speeds it may be important to maximize the energy that can be extracted by the wind by setting parameters such as blade pitch angle to an optimum position. On the other hand, at higher wind speeds it is important to adjust turbine parameters to avoid operation under conditions which might lead to damage. For example, wind turbines typically have a predefined rated power. When this power output is exceeded, the blade pitch angle and other operating parameters may be adjusted to reduce the amount of energy that is extracted from the wind. Wind turbines also need to be designed to withstand extreme operating conditions, for example those defined in IEC 61400-1:2005. Typically, these extreme conditions are rare single events or a small number of cumulative events which cause large, often unbalanced, loads on the wind turbine and will damage the turbine or reduce the overall lifetime of the turbine components, such as the blades or the gearbox by a significant amount.

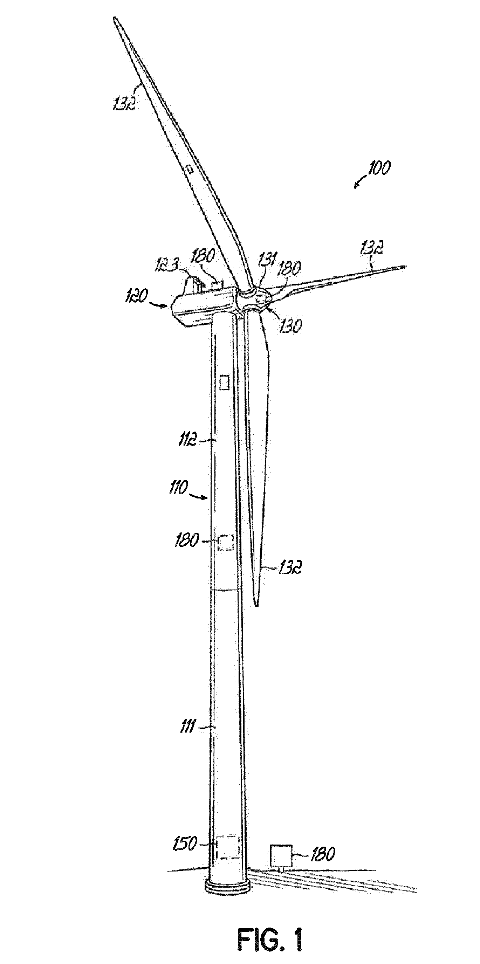

Figure 1 illustrates an exemplary wind turbine 100 according to an embodiment of the invention. As illustrated in Figure 1, the wind turbine 100 includes a tower 110, a nacelle 120, and a rotor 130. In one embodiment of the invention, the wind turbine 100 may be an onshore wind turbine. However, embodiments of the invention are not limited only to onshore wind turbines. In alternative embodiments, the wind turbine 100 may be an off shore wind turbine located over a water body such as, for example, a lake, an ocean, or the like.

The tower 110 of wind turbine 100 may be configured to raise the nacelle 120 and the rotor 130 to a height where a strong, less turbulent, and generally unobstructed flow of air may be received by the rotor 130. The height of the tower 110 may be any reasonable height. The tower 110 may be made from any type of material, for example, steel, concrete, or the like. In some embodiments the tower 110 may be made from a monolithic material. However, in alternative embodiments, the tower 110 may include a plurality of sections, for example, two or more tubular steel sections 111 and 112, as illustrated in Figure 1. In some embodiments of the invention, the tower 110 may be a lattice tower. Accordingly, the tower 110 may include welded steel profiles.

The rotor 130 includes a rotor hub (hereinafter referred to simply as the "hub") 131 and at least one blade 132 (three such blades 132 are shown in Figure 1). The rotor hub 131 is configured to couple the at least one blade 132 to a shaft (not shown). The blades 132 have an aerodynamic profile such that, at predefined wind speeds, the blades 132 experience lift, thereby causing the blades to radially rotate around the hub. The nacelle 120 includes one or more components configured to convert aero-mechanical energy of the blades to rotational energy of the shaft, and the rotational energy of the shaft into electrical energy.

Figure 1 also depicts a wind sensor 123. Wind sensor 123 is configured to detect a direction of the wind at or near the wind turbine 100. By detecting the direction of the wind, the wind sensor 123 can provide useful data that may determine operations to yaw the wind turbine 100 into the wind. The wind sensor 123 can use the speed and/or direction of the wind to control the blade pitch angle. Wind speed data can also be used to determine an appropriate pitch angle that allows the blades 132 to capture a desired amount of energy from the wind or to avoid excessive loads on turbine components. In some embodiments, the wind sensor 123 may be integrated with a temperature sensor, pressure sensor, and the like, which provides additional data regarding the environment surrounding the wind turbine. Such data can be used to determine one or more operational parameters of the wind turbine to facilitate capturing of a desired amount of energy by the wind turbine 100 or to avoid damage to components of the wind turbine.

In one embodiment of the invention, a light detection and ranging (LIDAR) device 180 is provided on or near the wind turbine 100. For example, the LIDAR 180 can be placed on a nacelle, hub, and/or tower of the wind turbine, as illustrated in Figure 1. In alternative embodiments, the LIDAR 180 may be placed in one or more blades 132 of the wind turbine 100. In other embodiments, the LIDAR device may be placed near the wind turbine 100, for example, on the ground as shown in Figure 1. In general, the LIDAR 180 may be configured to detect wind speed and/or direction at one or more points in front of the wind turbine 100. In other words, the LIDAR 180 allows the wind turbine to detect wind speed before the wind actually reaches the wind turbine. This allows the wind turbine 100 to proactively adjust one or more of blade pitch angle, generator torque, yaw position, and like operational parameters to capture greater energy from the wind, reduce loads on turbine components, and the like. In embodiments, a controller is configured to combine the data received from a LIDAR device 180 and the wind sensor 123 to generate a more accurate measure of wind speed and/or direction.

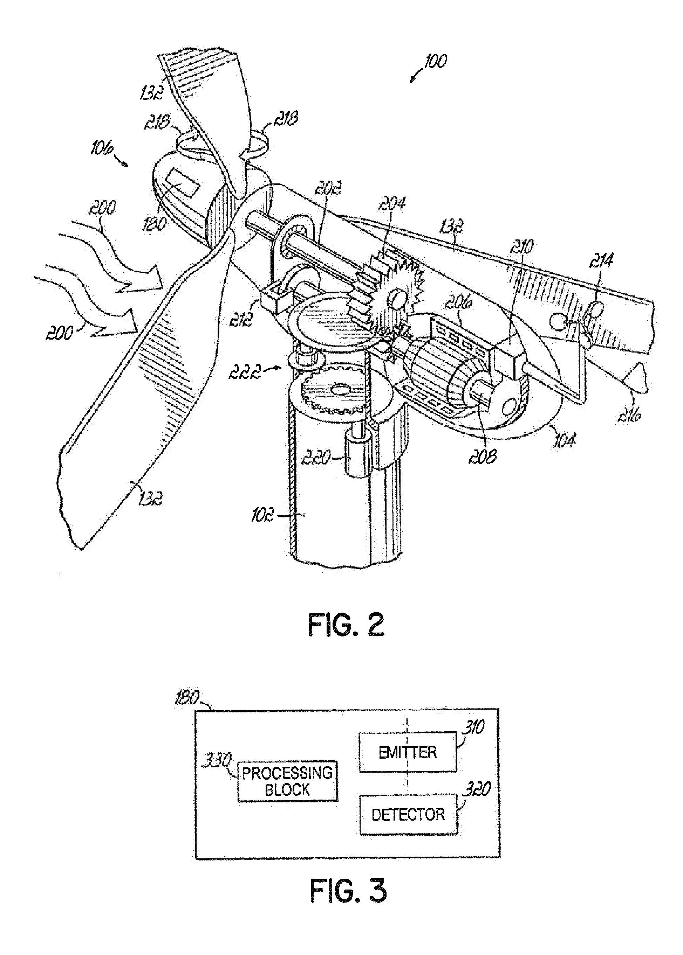

FIG. 2 is a diagrammatic view of typical components internal to the nacelle 120 and tower 110 of a wind turbine generator 100. When the wind 200 pushes on the blades 132, the rotor 130 spins, thereby rotating a low-speed shaft 202. Gears in a gearbox 204 mechanically convert the low rotational speed of the low-speed shaft 202 into a relatively high rotational speed of a high-speed shaft 208 suitable for generating electricity using a generator 206. In an alternative embodiment, the gear box may be omitted, and a single shaft, e.g., the shaft 202, may be directly coupled with the generator 206.

In one embodiment, a controller 210 senses the rotational speed of one or both of the shafts 202, 208. If the controller decides that the shaft(s) are rotating too fast, the controller signals a braking system 212 to slow the rotation of the shafts, which slows the rotation of the rotor 106, in turn. The braking system 212 can prevent damage to the components of the wind turbine generator 100. The controller 210 may also receive inputs from an anemometer 214 (providing wind speed) and/or a wind vane 216 (providing wind direction). Based on information received, the controller 210 may send a control signal to one or more of the blades 108 in an effort to adjust the pitch 218 of the blades. By adjusting the pitch 218 of the blades with respect to the wind direction, the rotational speed of the rotor (and therefore, the shafts 202, 208) may be increased or decreased. Based on the wind direction, for example, the controller 210 may send a control signal to an assembly comprising a yaw motor 220 and a yaw drive 222 to rotate the nacelle 104 with respect to the tower 102, such that the rotor 106 may be positioned to face more (or, in certain circumstances, less) upwind or downwind (if it is a downwind turbine).

The generator 206 may be configured to generate a three phase alternating current based on one or more grid requirements. In one embodiment, the generator 206 may be a synchronous generator. Synchronous generators can be configured to operate at a constant speed, and can be directly connected to the grid. In some embodiments, the generator 206 may be a permanent magnet generator. In alternative embodiments, the generator 206 is an asynchronous generator, also sometimes known as an induction generator. Induction generators may or may not be directly connected to the grid. For example, in some embodiments, the generator 206 may be coupled to the grid via one or more electrical devices configured to, for example, adjust current, voltage, and other electrical parameters to conform with one or more grid requirements. Exemplary electrical devices include, for example, inverters, converters, resistors, switches, transformers, and the like.

Embodiments of the invention are not limited to any particular type of generator or arrangement of the generator and one or more electrical devices associated with the generator in relation to the electrical grid. Any suitable type of generator including (but not limited to) induction generators, permanent magnet generators, synchronous generators, or the like, configured to generate electricity according to grid requirements falls within the purview of the invention.

Figure 2 also illustrates an exemplary hub mounted LIDAR 180 according to an embodiment of the invention. While shown on the hub in Figure 2, in alternative embodiments, the LIDAR device 180 may be placed on or near any location of the turbine, e.g., on the ground, in the blades, on the nacelle, on the tower, and the like.

Figure 3 illustrates an exemplary view of components within a LIDAR 180 according to an embodiment of the invention. As illustrated, LIDAR 180 includes an emitter 310, a detector 320, and a processing block 330. The term 'processing logic' is used herein with reference to any combination of one or more of the emitter 310, detector 320, and the processing block 330. While a single emitter detector pair 310-320 are shown in Figure 3, in alternative embodiments, the LIDAR 180 may include any number of emitters and/or detectors, In one embodiment of the invention, an emitter-detector is capable of performing a scanning operation to measure wind properties at a plurality of points.

The emitter 310 is configured to generate a light beam such as an ultra violet, visible, near infra-red and/or infra-red light beam. The detector 320 is configured to detect backscattering of the light beam emitted by the emitter from one or more objects. The processing block 330 is configured to determine one or more properties of the backscattered light detected by detector 320 and determine one or more properties of the one or more objects from which the light beam is reflected.

As stated previously, the LIDAR 180 is used to measure wind speed and/or direction at a remote position or location. Knowledge about the wind speed and direction at a remote position or location, e.g., in front or upstream of the rotor of a wind turbine, allows the wind turbine to optimize one or more operational parameters such as blade pitch angle and/or generator torque to reduce loads on wind turbine components and/or increase energy capture. To measure the wind speed remotely, a light beam (e.g., a laser beam) is emitted into oncoming wind by, for example, emitter 310 of the LIDAR 180. The emitted light may reflect off of aerosols (e.g., pollen, dust) in the wind and may be scattered in multiple directions. A portion of the scattered light may travel back to the LIDAR 180, where it is detected by, e.g., the detector 320 of LIDAR 180. Based on the backscattered light, one or more properties of the aerosols may be determined by the processing block 330. For example, the processing block 330 may use the Doppler Effect to determine properties of the aerosols. Because the properties of the aerosols strongly correlate with the property of the wind carrying the aerosols, properties of the wind, e.g. wind speed and direction, can be determined based on the properties of the aerosols.

In one embodiment of the invention, the emitter 310 is configured to generate pulsed or short burst of radiation. In one embodiment, one or more properties of the radiation are set to differ from burst to burst. Pulsed radiation allows the LIDAR 180 to determine properties of aerosols at multiple remote locations, thereby facilitating a more accurate estimation of properties of the oncoming wind.

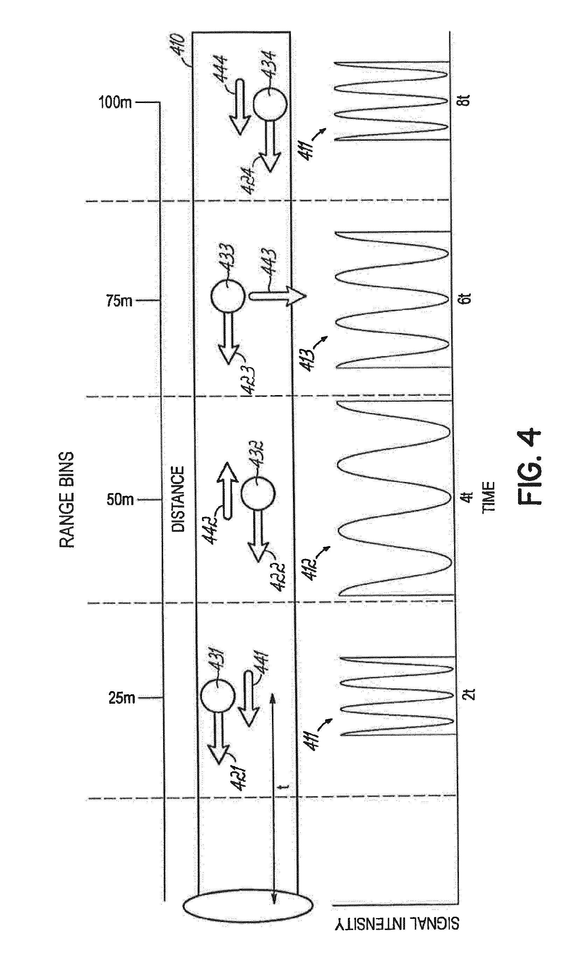

Figure 4 diagrammatically illustrates operation of a pulsed LIDAR system according to an embodiment of the invention. As shown, pulsed radiation 410 is emitted by the LIDAR 180 into oncoming wind. In one embodiment, the radiation 410 may include short bursts of radiation of different intensity. Other properties of radiation such as pulse length, pulse shape, pulse frequency; and pulse size can also be varied. The pulsed radiation may be used to measure properties of the wind at multiple distances, e.g., at 25m, 50m, 75m, and 100m as shown in Figure 4. Each of the multiple distances at which the wind properties are measured is referred to herein as a range gate. For example, Figure 4 illustrates 4 range gates. The range gates can be seen to lie in a common plane

While variation of the intensity of radiation/light is disclosed hereinabove, in alternative embodiments, any other property of the light, e.g., the size of the pulse, shape of the pulse, length of the pulse, or the like, may be varied from burst to burst. In another embodiment, instead of using pulsed radiation, the LIDAR 180 may include a plurality of emitter detector pairs, wherein each emitter detector pair is associated with a particular range gate. Each of the emitter detector pairs then emits and detect unique type of radiation, e.g., radiation of a particular intensity, thereby allowing the emitter detector pair to sense the properties of wind at the associated range gate.

Figure 4 assumes that it takes time t for the radiation to travel a distance of 25m. Accordingly, to measure the wind properties at each of the predefined distances, the detector measures the change in frequency of the radiation as it interacts with the aerosols in the air. For example, at 25m the aerosol particle is moving towards the light source, which causes the frequency of the reflected light to be greater 411. This change in the light properties is utilized to measure the properties of the wind at 25m. Similarly, pulse of light 412 is utilized to measure the properties of the wind at 50m. A third pulse of light 413 is utilized to measure the properties of the wind at 75m, and finally a fourth pulse of light 411 may be utilized to measure the properties of the wind at 100m.

As further illustrated in Figure 4, at least a portion of the pulsed radiation may be reflected back towards the LIDAR 180 by aerosols in the wind. For example, an aerosol particle 431 at a distance of 25m from the LIDAR 180 may reflect a portion 421 of the pulsed radiation back to the LIDAR 180. Similarly the particles 432, 433, and 434 are shown reflecting portions of the pulsed radiation 422, 423, and 424, respectively from distances 50m, 75m, and 100m, back towards the LIDAR 180. While only a single aerosol particle is shown at each of distances 25m, 50m, 75m, and 100m for purposes of simplicity, one skilled in the art will recognize that a plurality of aerosol particles may exist at each predefined distance from the LIDAR 180, and that each particle may backscatter a portion of the pulsed radiation to the LIDAR 180.

In one embodiment of the invention, the backscattered portions of the pulsed radiation 421-424 may be received by the detector 320 at times 2t, 4t, 6t, and 8t, respectively. The processing block 330 (See Figure 3) may analyze the detected backscattered radiation to determine one or more properties of the aerosol particles 431-434. The processing block 330 can utilize the Doppler Effect to determine the speed of the aerosol particles 431-434 in the direction of the laser.

It is possible that the aerosol particles at different locations may have different speeds and direction. For example, aerosol particle 431 is shown moving in a first direction 441, aerosol particle 432 is shown moving in a second direction 442, aerosol particle 433 is shown moving in a third direction 443, and aerosol particle 434 is shown moving in a fourth direction 444. Because aerosol particles may be moving at different speeds and directions at different distances, the particles at one particular location alone may not provide an accurate indication of properties of the wind that is moving towards the wind turbine. Embodiments of the invention provide a LIDAR 180 capable of measuring properties of the wind at a plurality of locations and determining a more accurate indication of the properties of wind that will reach the turbine.

While Figure 4 illustrates measuring properties of the wind at multiple different points that are at different distances from the wind turbine rotor, in alternative embodiments, the multiple different points of measurement may be the same distance from the wind turbine rotor. For example, in one embodiment, a scanning LIDAR device may be used to measure wind properties at multiple points that are a predefined distance from the wind turbine rotor. In one embodiment, a combination of measurements at multiple locations, some of which may be different distances, and some of which may be the same distance from the wind turbine rotor may be used to estimate the property of oncoming wind.

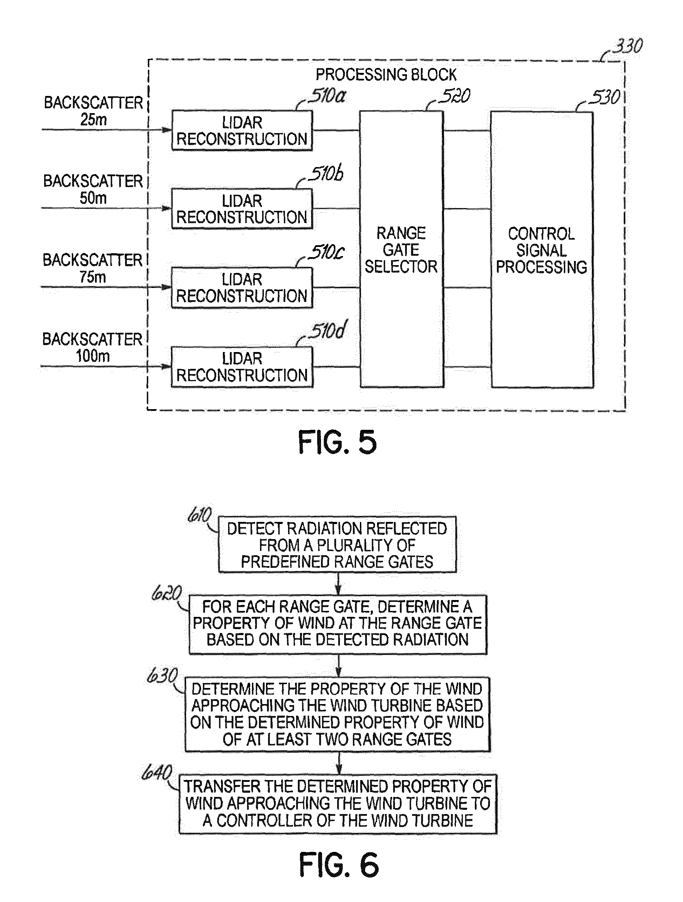

Figure 5 illustrates a more detailed view of the processing block 330 according to an embodiment of the invention. The processing block 330 may be implemented as hardware, software, or a combination of hardware and software. While shown as a part of the LIDAR device 180, in alternative embodiments, the processing block may be implemented outside the LIDAR device 180, for example, in the wind turbine controller 210 (see Figure 2).

As illustrated in Figure 5 the processing block 330 includes a plurality of LIDAR reconstruction blocks 510 (four blocks 510a-d shown), a range gate selector 520, and a control signal processing block 530. Each of the LIDAR reconstruction blocks 510 is configured to determine one or more properties of the wind at a remote location. In one embodiment, each LIDAR reconstruction block 510 corresponds to a respective range gate. For example, LIDAR reconstruction block 510a, 510b, 510c, and 510d of Figure 5, corresponds to the range gates 25m, 50m, 75m, and 100m respectively in Figure 4.

Each of the LIDAR reconstruction blocks 510 determines a line of sight velocity of the aerosols associated with their respective range gate based on the reflected beam. The line of sight velocity refers to the velocity of the wind in a direction along the direction of the pulsed radiation. The line of sight velocities may be transferred to a separate controller, e.g., the controller 210, which then computes one or more of the axial wind speed, lateral wind speed, absolute wind speed, and/or the wind direction. The axial wind speed refers to the wind speed in a direction that is perpendicular to the rotor plane (out of plane), and the lateral wind speed refers to the wind speed in a direction that is parallel to the rotor plane (in plane).

In one embodiment of the invention, each LIDAR reconstruction block 510 is configured to perform coherence filtering to remove any noise from undesirable sources in the detected radiation for a particular range gate. Noise in the radiation may be introduced via other sources of radiation, reflections from one or more previous or subsequent pulses of radiation of different intensity, and the like. Furthermore, different frequencies in the wind may be coherent at different distances. For example, high frequencies at distances at or near 200m from the wind turbine rotor may not be expected to reach the rotor. Accordingly, such high frequencies may be filtered out in embodiments of the invention.

In some instances it may be possible that there are no aerosols (or a very few aerosols) exist at or near a particular range gate. Accordingly, the LIDAR reconstruction block 510 associated with that particular range gate may not detect adequate backscattered radiation. In some embodiments, the LIDAR 180 may be placed on a nacelle of a wind turbine. Accordingly, the moving blades of the wind turbine may block the emitted radiation from reaching the range gate. In some other embodiments, after performing the coherent filtering, the LIDAR reconstruction block 510 may determine that the detected radiation is not reliable for calculating properties of the wind for the respective range gate.

In such instances, the LIDAR reconstruction block 510 may be configured to generate a signal indicating that data related to that range gate is not valid or not reliable. For example, if reflected radiation is not detected within a predefined period of time from the time of emission of radiation, the LIDAR reconstruction block 510 may be configured to generate a signal indicating that data for the range gate associated with the LIDAR reconstruction block 510 is not reliable.

As illustrated in Figure 5, the LIDAR reconstruction blocks 510 are coupled with the range gate selector 520. In one embodiment, the LIDAR reconstruction blocks 510 are configured to transfer one or more signals to the range gate selector 520. For example, each LIDAR reconstruction block 510 transfers data related to one or more of axial, lateral, vertical, absolute wind speed, and/or wind direction for a respective range gate to the range gate selector 520. In some embodiments, when the data for a particular range gate is determined to be unreliable (due to, for example, lack of backscattering particles), the LIDAR reconstruction block 510 for that range gate transfers a signal indicating that the data for the range gate is not reliable.

The range gate selector 520 receives signals from each of the LIDAR reconstruction blocks 510 and transfers only valid data to the control signal processing block 530. For example, if LIDAR reconstruction block 510a indicates that data from that block is not reliable, then the range gate selector 520 may not transfer data from the LIDAR reconstruction block 510a to the control signal processing block 530.

The control signal processing block 530 can be configured to combine the data received from two or more LIDAR reconstruction blocks 510 (via the range gate selector 520), and determine an estimated wind speed and/or direction for wind that will approach the wind turbine rotor. For example, in one embodiment, the control signal processing block averages the valid data received from a plurality of LIDAR reconstruction blocks 510 to determine the estimated wind speed and/or direction.

In an alternative embodiment, the control processing block uses a root mean squared average on the valid data received from a plurality of LIDAR reconstruction blocks 510 to determine the estimated wind speed and/or direction. In an alternative embodiment, the control signal processing block 530 is configured to determine a weighted average of the data received from the LIDAR reconstruction blocks 510. For example, in a particular embodiment, range gates closer to the turbine are assigned a greater weight than range gates that are further away from the turbine.

In one embodiment of the invention, the estimated properties of wind expected to approach the wind turbine are provided (by the control signal processing block 530) to one or more controllers of the wind turbine. For example, in one embodiment, the estimated wind speed of wind approaching the wind turbine may be provided to a turbine pitch controller. The turbine pitch controller can then adjust a pitch angle of the wind turbine blades based on the received estimated wind speed to maximize energy production, reduce loads on wind turbine components, or the like. In another embodiment, an estimated wind direction calculated by the control signal processing block 530 can be provided to a yaw controller of the wind turbine. The yaw controller adjusts a yaw position of the wind turbine based on the received estimated wind position to ensure that the wind turbine is facing upwind. While a pitch controller and a yaw controller are referenced herein, in alternative embodiment, the estimated wind properties may be transferred to any controller of the wind turbine, e.g., a rotor speed controller.

Figure 6 is a flow diagram of exemplary operations performed to determine a property of wind approaching a wind turbine, according to an embodiment of the invention. The operations begin in step 610 by detecting radiation reflected from a plurality of predefined range gates. For example, referring to Figures 4 and 5, LIDAR reconstruction blocks 510 detect reflected radiation from a plurality of range gates. In step 610, a property of wind is determined for each range gate based on the detected radiation. As described above, the LIDAR reconstruction blocks 510 determine one or more of an absolute wind speed, lateral wind speed, vertical wind direction axial wind speed, wind direction, or the like for respective range gates. In step 630, the property of the wind approaching the wind turbine is determined based on the determined property of wind of at least two range gates. Then, in step 640, the determined property of wind approaching the wind turbine is transferred to a controller of the wind turbine, e.g., a pitch controller, rotor speed controller, yaw controller, or the like.

In another embodiment of the invention the measured wind properties from the remote sensing device, which were measured at a plurality of locations ahead of the rotor, are mapped to a time/distance ahead of the WTG and then combined in the WTG's controller. The turbine controller will then use this information to optimize energy capture or reduce loading on turbine components. This could be achieved by calculating the phase lead for each measurement distance, and then offsetting the measured signals by this amount, when the signals are combined. The phase offset will be continually updated during operation. It is also advantageous in this embodiment to provide different weightings to the properties of the wind measured by the remote sensor, depending on the wind speed, direction and the distance from the rotor.

In some embodiments of the invention, the controller may be configured to improve the quality of wind field predictions calculated from LIDAR measurements, for example, the LIDAR measurements that may be retrieved from the steps of Figure 6. In particular, the controller may be configured to combine the measurements from a LIDAR unit with a dynamic model of how a wind field evolves to generate a more accurate estimation of the wind filed that may approach a turbine, thereby allowing for more accurate control for optimal power production, damage avoidance, and the like. In one embodiment, the aforementioned controller may be a controller of a single wind turbine configured to utilize measurements from a LIDAR unit associated with the single wind turbine to estimate properties of a wind filed approaching the single wind turbine. In an alternative embodiment, the controller may be a wind park controller configured to estimate a wind field approaching a wind park using measurements from one or more LIDAR units placed in the wind park.

The wind flow field over a terrain in front of a wind turbine evolves according to complex dynamic relationships dependent upon, for example, the field at the boundary of the domain of interest, the operating point of the turbine, the site topography, and the like. Computational fluid dynamic (CFD) models do exist, but it is not possible to run these online to simply map the measurements to a field because it would be far too computationally expensive, and in some cases, can take weeks to run a single simulation.

A simplifying assumption, known as Taylor's frozen turbulence, states that fluctuations about a mean flow may simply be advected downstream and can be used to get a reasonable model of the flow:

$$\frac{\partial w}{\partial t}(y,t) = -\bar{v}\frac{\partial w}{\partial y}(y,t), \; w(L,t) = w_i(t), \; w(\cdot,0) = w_0(\cdot), \quad (1)$$

where $w(y,t)$ is the Taylor's frozen turbulence approximation of the rotor averaged wind speed a distance $y$ in front of the turbine at time $t$, $\bar{v}$ is the mean wind speed (assume known and slowly changing) and $L$ is the distance of measurement from the turbine. A method of lines solution to equation (1) above facilitates the use of this model to map the measured velocity from a single LIDAR measurement a distance $L_1$ away to an approximation $\hat{v}_r(t)$ of the rotor averaged wind speed:

$$\hat{v}_r(t) = w\left(L_1, t - \frac{L_1}{\overline{v}}\right). \qquad (2)$$

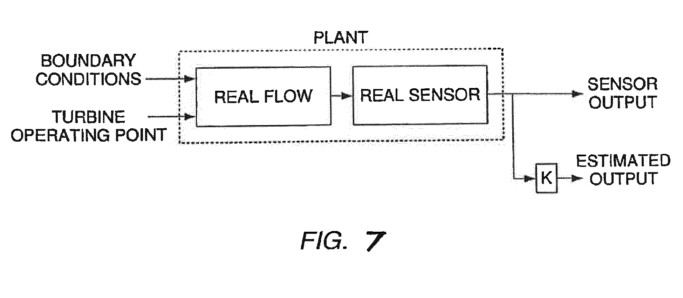

Single LIDAR units are capable of taking a number of measurements in the flow, as described above in reference to Figures 4 to 6. One way to fuse the information from these sensors would be to simply take a weighted sum of the three individual predictions, see Figure 7:

$$\hat{v}_r(t) = k_1 w\left(L_1, t - \frac{L_1}{\overline{v}}\right) + k_2 w\left(L_2, t - \frac{L_2}{\overline{v}}\right) + k_3 w\left(L_3, t - \frac{L_3}{\overline{v}}\right), \qquad (3)$$

where $k_1, k_2, k_3$ are the weighting factors corresponding to the three measurements respectively. Note that in the absence of noise and for the case where Taylor's frozen turbulence assumption is true,

$$w\left(L_1, t - \frac{L_1}{\overline{v}}\right) = w\left(L_2, t - \frac{L_2}{\overline{v}}\right) = w\left(L_3, t - \frac{L_3}{\overline{v}}\right).$$

While the invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described.

**Claims**

1. A method for determining a property of wind approaching a wind turbine, comprising:

   detecting radiation reflected from a plurality of distinct positions upstream of the wind turbine;
   for each position, determining a property of wind at the position based on the detected radiation;
   determining the property of the wind approaching the wind turbine based on the determined property of wind at least two distinct positions; and
   transferring the determined property of wind approaching the wind turbine to a controller of the wind turbine;
   wherein determining the property of the wind approaching the wind turbine based on the determined property of wind of at least two positions comprises computing an average of the determined property of the wind of the at least two positions.

2. A method for determining a property of wind approaching a wind turbine, comprising:

   detecting radiation reflected from a plurality of distances in front of a rotor of the wind turbine;
   combining properties of the detected radiation from the plurality of distances into a single signal, at a time/ distance ahead of the wind turbine,
   wherein the combining comprises weighting the properties of the detected radiation from the plurality of distances, and wherein the single signal is determined based on at least one of wind speed, wind direction, and plurality of distances.

3. The method of claim 1 or 2, wherein radiation of a predefined property is emitted for each of the plurality of positions, and wherein detecting radiation reflected from a position comprises detecting reflected radiation with the predefined property associated with the position.

4. The method of claim 3, wherein the predefined property comprises one of intensity, pulse length, pulse shape, pulse frequency; and pulse size.

5. The method of any preceding claim, wherein the property of wind determined for each position comprises at least one of an absolute wind speed, a lateral wind speed, an axial wind speed, a vertical wind speed, a line of sight wind speed; and a wind direction.

6. The method of any preceding claim, further comprising:

    determining whether the property of wind determined at each position is reliable; and
    determining the property of wind approaching the wind turbine based on positions where the property of wind is determined to be reliable.

7. The method of any preceding claim, wherein determining a property of wind based on the detected radiation for each position comprises performing coherence filtering of the detected radiation to remove noise.

8. The method of claim 1, wherein the average is a weighted average, and wherein some positions are given a greater weighting than others.

9. A device, configured to:

    detect radiation reflected from a plurality of predefined positions upstream of a wind turbine;
    for each position, determine a property of wind at the position based on the detected radiation;
    determine a property of wind approaching the wind turbine based on the determined property of wind of at least two positions; and
    transfer the determined property of wind approaching the wind turbine to a controller of the wind turbine;
    wherein determine the property of wind approaching the wind turbine based on the determined property of wind of at least two positions by computing an average of the determined property of the wind of the at least two positions.

10. A device, configured to:

    detect radiation reflected from a plurality of distances in front of a rotor of the wind turbine;
    combine properties of the detected radiation from the plurality of distances into a single signal, at a time/distance ahead of the wind turbine,
    wherein the combining comprises weighting the properties of the detected radiation from the plurality of distances, and wherein the single signal is determined based on at least one of wind speed, wind direction, and plurality of distances.

11. The device of claim 9 or 10, wherein the property of wind determined for each position comprises at least one of: an absolute wind speed, a lateral wind speed, an axial wind speed, a line of sight wind speed; and a wind direction.

12. The device of claim 9, 10 or 11, configured to:

    determine whether the property of wind determined at each position is reliable; and
    determine the property of wind approaching the wind turbine based on positions where the property of wind is determined to be reliable.

13. The device of claim 9, 10, 11 or 12, configured to determine a property of wind based on the detected radiation for each position by performing coherence filtering of the detected radiation to remove noise.

14. The device of any of claims 9 to 13, wherein the average is a weighted average, wherein some positions are given a greater weighting than others.

15. A wind turbine comprising the device of any of claims 9 to 14.

FIG. 1

FIG. 2

FIG. 3

FIG. 4

PROCESSING BLOCK _330_

BACKSCATTER
25m
→ LIDAR RECONSTRUCTION _510a_

BACKSCATTER
50m
→ LIDAR RECONSTRUCTION _510b_

BACKSCATTER
75m
→ LIDAR RECONSTRUCTION _510c_

BACKSCATTER
100m
→ LIDAR RECONSTRUCTION _510d_

RANGE GATE SELECTOR _520_

CONTROL SIGNAL PROCESSING _530_

## FIG. 5

_610_ DETECT RADIATION REFLECTED FROM A PLURALITY OF PREDEFINED RANGE GATES

_620_ FOR EACH RANGE GATE, DETERMINE A PROPERTY OF WIND AT THE RANGE GATE BASED ON THE DETECTED RADIATION

_630_ DETERMINE THE PROPERTY OF THE WIND APPROACHING THE WIND TURBINE BASED ON THE DETERMINED PROPERTY OF WIND OF AT LEAST TWO RANGE GATES

_640_ TRANSFER THE DETERMINED PROPERTY OF WIND APPROACHING THE WIND TURBINE TO A CONTROLLER OF THE WIND TURBINE

## FIG. 6

PLANT

BOUNDARY
CONDITIONS ————→ | REAL FLOW | → | REAL SENSOR | ————→ SENSOR
OUTPUT

TURBINE ————→
OPERATING POINT

ESTIMATED
| K | → OUTPUT

*FIG. 7*

## EUROPEAN SEARCH REPORT

**Application Number**

EP 12 18 8552

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 476 506 A (VESTAS WIND SYS AS [DK]) 29 June 2011 (2011-06-29) | 1,2,5-15 | INV. G01S17/95 F03D7/02 |
| Y | * page 2, lines 9-16; figures 1-3 * * page 4, lines 16-18 * * page 3, lines 11-12 * * page 6, lines 19-29 * * page 7, lines 7-33 * * page 5, lines 2-7 * ----- | 3,4 | |
| Y | WO 2009/134221 A1 (OPTICAL AIR DATA SYSTEMS LLC [US]; ROGERS PHILLIP L [US]; CHANG CHIA C) 5 November 2009 (2009-11-05) * paragraphs [0010], [0029] - [0044]; figures 3,5 * ----- | 3,4 | |
| A | WO 98/42980 A1 (RISOE FORSKNINGSCENTER [DK]; LADING LARS [DK]; FRANDSEN STEN [DK]; SAN) 1 October 1998 (1998-10-01) * page 23, lines 14-15; figure 20 * * page 27, lines 8-11 * ----- | 2,10 | |

**TECHNICAL FIELDS SEARCHED (IPC)**

G01S
F03D

The present search report has been drawn up for all claims

| Place of search | Date of completion of the search | Examiner |
|---|---|---|
| Munich | 14 January 2013 | Metz, Carsten |

EPO FORM 1503 03.82 (P04C01)

**ANNEX TO THE EUROPEAN SEARCH REPORT
ON EUROPEAN PATENT APPLICATION NO.**                    EP 12 18 8552

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2013

| Patent document cited in search report | | Publication date | Patent family member(s) | | Publication date |
|---|---|---|---|---|---|
| GB 2476506 | A | 29-06-2011 | CN | 102762852 A | 31-10-2012 |
| | | | EP | 2516850 A2 | 31-10-2012 |
| | | | GB | 2476506 A | 29-06-2011 |
| | | | WO | 2011076875 A2 | 30-06-2011 |
| WO 2009134221 | A1 | 05-11-2009 | AU | 2008355731 A1 | 05-11-2009 |
| | | | CA | 2722603 A1 | 05-11-2009 |
| | | | CN | 102016601 A | 13-04-2011 |
| | | | EP | 2269078 A1 | 05-01-2011 |
| | | | JP | 2011519424 A | 07-07-2011 |
| | | | KR | 20110018298 A | 23-02-2011 |
| | | | US | 2011037970 A1 | 17-02-2011 |
| | | | WO | 2009134221 A1 | 05-11-2009 |
| WO 9842980 | A1 | 01-10-1998 | AU | 6393198 A | 20-10-1998 |
| | | | DE | 69814840 D1 | 26-06-2003 |
| | | | EP | 0970308 A1 | 12-01-2000 |
| | | | US | 6320272 B1 | 20-11-2001 |
| | | | WO | 9842980 A1 | 01-10-1998 |

EPO FORM P0459

For more details about this annex : see Official Journal of the European Patent Office, No. 12/82